# EUROPÄISCHE PATENTSCHRIFT

(11) **EP 3 922 961 B1**
(45) Veröffentlichungstag und Bekanntmachung des Hinweises auf die Patenterteilung: **03.01.2024**
(21) Anmeldenummer: 20179373.4
(22) Anmeldetag: 10.06.2020
(51) Int. Cl.: G01F 23/288, G01F 25/00, G01N 9/24, G01F 25/20

(54) **VERFAHREN ZUM KALIBRIEREN EINER VORRICHTUNG ZUM MESSEN EINES PROZESSWERTS MINDESTENS EINES STOFFES, VERFAHREN ZUM MESSEN EINES PROZESSWERTS MINDESTENS EINES STOFFES MITTELS EINER VORRICHTUNG UND SYSTEM**
METHOD FOR CALIBRATING A DEVICE FOR MEASURING A PROCESS VALUE OF AT LEAST ONE SUBSTANCE, METHOD FOR MEASURING A PROCESS VALUE OF AT LEAST ONE SUBSTANCE BY MEANS OF A DEVICE AND SYSTEM
PROCÉDÉ D'ÉTALONNAGE D'UN DISPOSITIF PERMETTANT DE MESURER UNE VALEUR DE PROCESSUS D'AU MOINS UNE SUBSTANCE, PROCÉDÉ DE MESURE D'UNE VALEUR DE PROCESSUS D'AU MOINS UNE SUBSTANCE AU MOYEN D'UN DISPOSITIF ET SYSTÈME

(43) Veröffentlichungstag der Anmeldung: 15.12.2021
(73) Patentinhaber: Berthold Technologies GmbH & Co. KG, 75323 Bad Wildbad (DE)
(72) Erfinder: Müller, Steffen, 75173 Pforzheim (DE)
(74) Vertreter: Patentanwälte Ruff, Wilhelm, Beier, Dauster & Partner mbB

(56) Entgegenhaltungen:
- DE-A1-102013 215 606
- DE-B4-102013 215 606
- US-A- 4 590 579
- US-A- 5 390 544
- US-A1- 2003 101 011
- US-A1- 2005 129 178
- US-A1- 2013 261 974

## Beschreibung

### ANWENDUNGSGEBIET UND STAND DER TECHNIK

Die Erfindung betrifft ein Verfahren zum Kalibrieren einer Vorrichtung zum Messen eines Prozesswerts mindestens eines Stoffes, ein Verfahren zum Messen eines Prozesswerts mindestens eines Stoffes mittels einer Vorrichtung und ein, insbesondere zugehöriges, System.

Radiometrische Messsysteme können beispielsweise verwendet werden, um einen Prozesswert wie beispielsweise einen Füllstand oder eine Dichte zu messen. Hierzu werden Messwerte bzw. Detektorwerte aufgenommen, welche über eine geeignete Kalibrierung umgerechnet werden können. Derartige Kalibrierungen werden bei bekannten Vorgehensweisen typischerweise in einer finalen Einbausituation, in der Regel beim Kunden, durch- bzw. ausgeführt. Hierfür ist typischerweise mindestens ein Prozesswert zu realisieren, wobei beispielsweise ein Füllstand angefahren wird oder eine Dichte im Labor gemessen wird, so dass eine Zählrate hierfür aufgenommen werden kann. Je mehr unterschiedliche Prozesswerte zur Kalibrierung verwendet werden können, desto besser kann das System kalibriert werden.

In der Realität ist es aber oft nicht möglich oder übermäßig aufwändig, beliebig verschiedene Prozesswerte anzufahren. Deshalb bestehen typische Kalibrierungen aus wenigen Kalibrierpunkten und einer Modellannahme wie beispielsweise linear oder exponentiell. Die Zuordnung des Prozesswerts wird dann über eine modellgerechte Interpolation zwischen den vorhandenen Kalibrierpunkten realisiert. Im Extremfall sind Kalibrierungen mit nur einem Wert realisiert, welche auch als Ein-Punkt-Kalibrierung bezeichnet werden können. Dies kann beispielsweise verwendet werden, wenn ein laufender Prozess nicht unterbrochen werden kann.

Jegliche Abweichung zur Modellannahme stellt einen Messfehler dar, der durch eine gute Kalibrierung hätte vermieden werden können. Die Abweichungen werden umso größer, je weniger Kalibrierpunkte gemessen werden können.

Im Übrigen offenbart die US 2013/261974 A1 eine Vorrichtung zur Bohrlochvermessung und ein Verwendungsverfahren zur Messung der ringförmigen Materialien, die zwischen dem Vermessungswerkzeug und der Formation angeordnet sind, und der scheinbaren Formationsschüttdichte in einem offenen Loch, einem verkleideten Loch oder einer anderen Leitung. Das Vermessungswerkzeug kann im Bohrloch zentralisiert werden. Nicht kollimierte Gammastrahlung wird in die umgebenden Medien emittiert und die Strahlungsmenge, die zum Werkzeug zurückkehrt, wird durch mehrere omnidirektionale Detektoren gemessen, die in voreingestellten Abständen von der Quelle beabstandet sind, um mehrere radiale Untersuchungstiefen bereitzustellen. Die ringförmige Dicke und Dichte von Materialien, die zwischen dem Vermessungswerkzeug und der Formation angeordnet sind, können aus den Detektorantworten bestimmt und verwendet werden, um die scheinbare Formationsschüttdichte abzuleiten.

### AUFGABE UND LÖSUNG

Einen wesentlichen Grund für eine Abweichung zwischen Modell und Realität stellt gestreute Strahlung dar. Eine Modellannahme kann beispielsweise darauf basieren, dass nur monoenergetische Gammastrahlen zum Messeffekt beitragen. In der Realität streuen die Gammastrahlen jedoch in unterschiedlicher Weise. Je nach Messaufbau und umliegenden Materialien variiert die Anzahl der gestreuten Gammastrahlen. Diese gestreute Strahlung ist daher nur schwer zu modellieren, da die Parameter vielfältig und für jeden Anwendungsfall unterschiedlich sind.

Letztlich wird deshalb bei bekannten Ausführungen typischerweise ein Kompromiss zwischen Messgenauigkeit und Aufwand bei der Inbetriebnahme in Kauf genommen.

Es ist deshalb eine Aufgabe der Erfindung, ein Verfahren bereitzustellen, welches im Vergleich zu bekannten Ausführungen alternativ oder besser ausgeführt ist, welches beispielsweise bei geringem Kalibrieraufwand eine hohe Genauigkeit der Kalibrierung ermöglicht. Es ist des Weiteren eine Aufgabe der Erfindung, ein, insbesondere zugehöriges, Verfahren zum Messen eines Prozesswerts mindestens eines Stoffes mittels einer Vorrichtung bereitzustellen. Außerdem ist es eine Aufgabe der Erfindung, ein, insbesondere zugehöriges, System bereitzustellen.

Dies wird erfindungsgemäß durch ein Verfahren nach Anspruch 1, ein Verfahren nach Anspruch 12 sowie ein System nach Anspruch 13 erreicht. Vorteilhafte Ausgestaltungen sind in den Unteransprüchen beansprucht.

Die Erfindung betrifft ein, insbesondere automatisches, Verfahren zum, insbesondere automatischen, Kalibrieren einer, insbesondere elektrischen und/oder radiometrischen, Vorrichtung zum Messen eines Prozesswerts mindestens eines Stoffes, insbesondere angeordnet innerhalb eines Hohlkörpers. Bei dem Prozesswert kann es sich insbesondere um einen Füllstand oder um eine Dichte handeln.

Die Vorrichtung umfasst bzw. weist eine, insbesondere elektrische und/oder gammaenergiesensitive, Detektoreinrichtung auf, wobei die Detektoreinrichtung zum, insbesondere automatischen, Messen eines Detektorwerts mittels, insbesondere automatischen und/oder gammaenergiesensitiven, Erfassens von Gammastrahlen, welche mindestens den Stoff, insbesondere und den Hohlkörper, mindestens teilweise durchdrungen haben, und, insbesondere automatischen, Erzeugens des Detektorwerts basierend auf den erfassten Gammastrahlen ausgebildet bzw. konfiguriert ist.

Das Verfahren umfasst bzw. weist die folgenden Schritte auf:
a) bei, insbesondere nur, einem, insbesondere einzigen, bekannten Prozesswert Messen, insbesondere automatisches Messen, insbesondere nur, eines, insbesondere einzigen, erstartigen Detektorwerts nur bzw. ausschließlich basierend auf erfassten Gammastrahlen, welche nicht oder wenig gestreut sind,
b) Berechnen, insbesondere automatisches und/oder analytisches Berechnen, einer Kalibrierzuordnung bzw. einer Kalibriertabelle basierend auf einem, insbesondere mathematischen, Prozessmodell, insbesondere mittels des Prozessmodells, wobei das Prozessmodell auf einer Beschreibung des Durchdringens nur bzw. ausschließlich berücksichtigend ungestreute Gammastrahlen basiert, insbesondere das Durchdringen nur berücksichtigend ungestreute Gammastrahlen beschreibt, und basierend auf, insbesondere nur, dem, insbesondere einzigen, gemessenen erstartigen Detektorwert, insbesondere und, insbesondere nur, dem, insbesondere einzigen, bekannten Prozesswert, wobei die Kalibrierzuordnung verschiedenen, insbesondere unbekannten, Prozesswerten jeweils einen, insbesondere verschiedenen, erstartigen Detektorwert zuordnet,
c) bei mindestens einem, insbesondere von dem bekannten Prozesswert verschiedenen, unbekannten Prozesswert, insbesondere der verschiedenen Prozesswerte, Messen, insbesondere automatisches Messen, eines, insbesondere weiteren, erstartigen Detektorwerts und Messen, insbesondere automatisches Messen, eines, insbesondere von dem erstartigen Detektorwert verschiedenartigen, zweitartigen Detektorwerts mindestens basierend auf erfassten Gammastrahlen, welche gestreut oder mehr gestreut, insbesondere und nicht wenig gestreut, sind,
d) Bestimmen, insbesondere automatisches Bestimmen, des unbekannten Prozesswerts mittels der berechneten Kalibrierzuordnung basierend auf dem gemessenen, insbesondere weiteren, erstartigen Detektorwert, und
e) Modifizieren, insbesondere automatisches Modifizieren, bzw. Ergänzen der Kalibrierzuordnung mittels Zuordnen des gemessenen zweitartigen Detektorwerts zu dem bestimmten Prozesswert, wobei das Verfahren aufweist:
   - Messen der erstartigen Detektorwerte jeweils nur basierend auf erfassten Gammastrahlen, deren Gamma-Energien gleich oder größer als ein erster Energieschwellenwert sind, und
   - Messen des zweitartigen Detektorwerts mindestens basierend auf erfassten Gammastrahlen, deren Gamma-Energien kleiner als der erste Energieschwellenwert sind.

Insbesondere kann mittels dieses Verfahrens zunächst in besonders einfacher Weise die Kalibrierzuordnung erstellt werden, insbesondere wofür keine komplexen Berechnungen notwendig sind, da lediglich ungestreute Gammastrahlen durch das Prozessmodell berücksichtigt werden. Insbesondere im Vergleich zu Prozessmodellen, welche auch gestreute Gammastrahlen berücksichtigen, kann dadurch eine erhebliche Einsparung an Rechenzeit erreicht werden. Die, insbesondere derart erhaltene, Kalibrierzuordnung wird zunächst verwendet, um erstartigen Detektorwerten einen jeweiligen Prozesswert zuzuordnen. Damit ist eine Grundkalibrierung erreicht, welche eine gewisse Genauigkeit bietet. Für das anfängliche Berechnen der Kalibrierzuordnung ist lediglich das Anfahren eines bekannten Prozesswerts erforderlich, wobei die Kalibrierzuordnung, welche basierend auf dem Prozessmodell erhalten wird, dabei typischerweise so normiert bzw. skaliert wird, dass der bei dem bekannten Prozesswert erhaltene erstartige Detektorwert den zugehörigen Prozesswert ergibt. Dies kann durch ein einfaches Normieren bzw. Skalieren der erhaltenen Werte erfolgen. Werden dann unbekannte Prozesswerte angefahren, so können diese mittels der Kalibrierzuordnung und der erstartigen Detektorwerte ermittelt werden und entsprechende zweitartige Detektorwerte können dem dann bekannten Prozesswert zugeordnet werden. Dadurch kann im Laufe der Zeit die Kalibrierzuordnung derart modifiziert werden, dass zusätzlich zu der anfänglichen Zuordnung zwischen erstartigen Detektorwerten und Prozesswerten auch eine Zuordnung zwischen zweitartigen, also eine Streuung berücksichtigenden Detektorwerten und Prozesswerten vorhanden ist, welche eine genauere Bestimmung von Prozesswerten ermöglicht.

Statt von einem Stoff kann beispielsweise auch von einem Material gesprochen werden.

Die Detektoreinrichtung kann beispielsweise mindestens einen Photomultiplier, insbesondere mindestens einen Silizium-Photomultiplier, aufweisen.

Der bekannte Prozesswert kann, insbesondere braucht aber nicht, von Null verschieden, insbesondere größer Null, sein.

Der Schritt a) kann aufweisen: bei mehreren bekannten Prozesswerten Messen mehrerer erstartiger Detektorwerte nur basierend auf erfassten Gammastrahlen, welche nicht oder wenig gestreut sind, und der Schritt b) kann aufweisen: Berechnen der Kalibrierzuordnung, insbesondere jeweils abschnittsweise, basierend auf dem Prozessmodell und basierend auf den, insbesondere jeweiligen, mehreren gemessenen erstartigen Detektorwerten, insbesondere und den, insbesondere jeweiligen, mehreren bekannten Prozesswerten.

Bezüglich des Berechnens der Kalibrierzuordnung, insbesondere mittels des Prozessmodells, wird auf die Fachliteratur und auf nachher Folgendes verwiesen.

Die Kalibrierzuordnung kann dem bekannten Prozesswert, den gemessenen erstartigen Detektorwert zuordnen.

Der zweitartige Detektorwert kann zusätzlich auf erfassten Gammastrahlen basieren, welche nicht oder wenig gestreut sind.

Es sei erwähnt, dass zusätzlich zu dem hier beschriebenen Streu-Kriterium mindestens ein weiteres Kriterium, wie beispielsweise ein Temperatur-Kriterium, möglich ist.

Der Schritt b) kann zeitlich mit und/oder zeitlich nach dem Schritt a) ausgeführt werden.

Insbesondere kann die Kalibrierzuordnung mittels des Prozessmodells berechnet werden, zeitlich danach kann bei dem bekannten Prozesswert der erstartige Detektorwert gemessen werden, und zeitlich danach kann die Kalibrierzuordnung basierend auf dem gemessenen erstartigen Detektorwert, insbesondere neu, berechnet, insbesondere normiert, werden. Zusätzlich oder alternativ kann der Schritt c) zeitlich nach dem Schritt b) ausgeführt werden. Weiter zusätzlich oder alternativ kann der Schritt d) zeitlich nach dem Schritt c) ausgeführt werden. Weiter zusätzlich oder alternativ kann der Schritt e) zeitlich nach dem Schritt d) ausgeführt werden.

Dadurch kann gewährleistet werden, dass für den erstartigen Detektorwert ausschließlich oder zumindest weitgehend nur Gammastrahlen verwendet werden, welche nicht oder wenig gestreut sind bzw. haben. Entsprechend kann für den zweitartigen Detektorwert gewährleistet werden, dass bei diesem auch gestreute, insbesondere mehr gestreute, Gammastrahlen berücksichtigt werden. Insbesondere kann das Verfahren aufweisen: Messen des zweitartigen Detektorwerts zusätzlich basierend auf erfassten Gammastrahlen, deren Gamma-Energien, insbesondere Gamma-Energie-Werte, gleich oder größer, insbesondere und nicht kleiner, als der erste Energieschwellenwert sind.

Gemäß einer Ausführung kann der Prozesswert ein Füllstandwert oder ein Dichtewert sein. Für derartige Prozesswerte hat sich das hier beschriebene Verfahren als besonders vorteilhaft erwiesen. Auch andere Prozesswerte können jedoch verwendet werden.

Gemäß einer Ausführung kann der Detektorwert ein Zählratenwert oder von dem Zählratenwert abhängig, insbesondere zu dem Zähratenwert proportional, sein. Beispielsweise können innerhalb eines bestimmten Zeitintervalls auftreffende Gammastrahlen bzw. -quanten erfasst und daraus der Zählratenwert gebildet werden. Je nach Anwendungsfall kommen in einem bestimmten Zeitintervall entweder umso mehr oder umso weniger Gammastrahlen bzw. -quanten an je weniger diese durch den Stoff gestreut werden.

Gemäß einer Ausführung kann das Verfahren umfassen bzw. aufweisen:
- Messen der erstartigen Detektorwerte jeweils nur basierend auf erfassten Gammastrahlen, deren Gamma-Energien, insbesondere Gamma-Energie-Werte, gleich oder größer als ein erster, insbesondere der erste, Energieschwellenwert sind, wobei der erste Energieschwellenwert mindestens 0,5-mal, insbesondere gleich, eines Compton-Energiewerts einer Compton-Lücke der, insbesondere erfassten, Gammastrahlen ist.

Dies, insbesondere der Energieschwellenwert gleich dem Compton-Energiewert, hat sich als besonders zielführende Vorgehensweise erwiesen, um lediglich wenig gestreute, insbesondere nicht gestreute bzw. ungestreute, Gammastrahlen zu erfassen. Insbesondere ist eine Compton-Lücke in einem Spektrum einer jeweiligen Häufigkeit, insbesondere Zählrate, über einer jeweiligen Energie von Gammastrahlen nach Durchdringen bzw. Durchgehen durch einen Stoff typischerweise eine Lücke unmittelbar unterhalb eines Peaks, welcher die maximale, d.h. einer Emissions- bzw. Austrittsenergie aus der Strahlungsquelle entsprechende, Energie angibt. Erst unterhalb der Compton-Lücke, also bei niedrigeren Energien als der maximale Peak abzüglich der Compton-Lücke, treten wieder signifikante Häufigkeiten, insbesondere Zählraten, im Spektrum auf. Innerhalb der Compton-Lücke liegt der Compton-Energiewert, welcher typischerweise als Energiewert bei einer minimalen Häufigkeit, insbesondere Zählrate, innerhalb der Compton-Lücke oder auch als Minimum einer angefitteten, beispielsweise U-förmigen Funktion innerhalb der Compton-Lücke definiert werden kann. Dadurch wird insbesondere eine Abgrenzung zwischen Gammastrahlen, welche nicht gestreut haben und somit eine Energie oberhalb des Compton-Energiewerts haben, und Gammastrahlen, welche gestreut haben und somit eine Energie unterhalb des Compton-Energiewerts haben, erreicht.

Gemäß einer Ausführung kann die Detektoreinrichtung ein Detektor-Rauschen mit einem Rausch-Energiewert aufweisen bzw. umfassen, und das Verfahren kann aufweisen bzw. umfassen:
- Messen des zweitartigen Detektorwerts, insbesondere und des erstartigen Detektorwerts, nur basierend auf erfassten Gammastrahlen, deren Gamma-Energien, insbesondere Gamma-Energie-Werte, gleich oder größer, insbesondere und nicht kleiner, als ein zweiter Energieschwellenwert sind, wobei der zweite Energieschwellenwert gleich oder größer als der Rausch-Energiewert ist.

Dadurch kann vermieden werden, dass das Detektor-Rauschen die Messung verfälscht.

Gemäß einer Ausführung kann das Verfahren den folgenden Schritt aufweisen bzw. umfassen:
- Emittieren der Gammastrahlen mit, insbesondere nur, einer, einzigen, diskreten Isotop-Gamma-Energie, insbesondere einem diskreten Isotop-Gamma-Energie-Wert, in mindestens den Stoff, insbesondere und den Hohlkörper, mittels mindestens einer Strahlungsquelle.

Dies erlaubt eine zweckmäßige Vorgehensweise, bei welcher Gammastrahlen mit bekannter Ausgangsenergie zur Verfügung stehen. Insbesondere kann der Compton-Energiewert kleiner als die Isotop-Gamma-Energie sein. Es sei erwähnt, dass auch in der Strahlungsquelle verwendete Isotope nicht nur eine Energie haben können, sondern beispielsweise auch zwei diskrete Energien haben können. Insbesondere kann der erste Energieschwellenwert basierend auf der höheren diskreten Energie gewählt bzw. eingestellt sein. Zusätzlich oder alternativ können die zwei diskreten Energien derart nah bei einander sein, dass sie als eine diskrete Energie bezüglich des ersten Energieschwellenwerts behandelt werden können, wie z.B. für Kobalt 60. Es können auch Mischisotope verwendet werden.

Gemäß einer Ausführung kann die Detektoreinrichtung mindestens einen Szintillator zum Erfassen der Gammastrahlen aufweisen bzw. umfassen. Der Szintillator kann eine Dichte von minimal 3 Gramm pro Kubikzentimeter (g/cm³), insbesondere von minimal 5 g/cm³, und/oder von maximal 20 g/cm³, insbesondere von maximal 10 g/cm³, insbesondere von 7 g/cm³, aufweisen bzw. haben. Insbesondere kann der Szintillator teilweise oder vollständig aus mindestens einem Element mit Ordnungszahl (Z) gleich oder größer als 31, 39, 48, 53, 55 oder 57 bestehen. Derartige Dichten, insbesondere derartige Elemente, haben sich für die hier relevanten Detektionszwecke als vorteilhaft erwiesen, insbesondere da in diesen die jeweilige Energie von Gammastrahlen mit einer höheren Wahrscheinlichkeit vollständig deponiert wird. Insbesondere kann Bismutgermanat (BiGeO) und/oder Lanthanbromid (LaBr) und/oder Cäsiumiodid (Csl) und/oder Lutetiumyttriumoxyorthosilikat (LuYSiO) und/oder Cadmiumwolframat (CdWo) und/oder Gadoliniumaluminiumgalliumoxid (GdAlGaO) verwendet werden. Sie können beispielsweise alleine oder auch kombiniert in der Detektoreinrichtung verwendet werden.

Gemäß einer Ausführung kann das Verfahren die folgenden Schritte aufweisen bzw. umfassen:
- bei dem bekannten Prozesswert Messen, insbesondere Messen, eines, insbesondere weiteren, zweitartigen Detektorwerts, und
- in der Kalibrierzuordnung Zuordnen, insbesondere automatisches Zuordnen, des gemessenen, insbesondere weiteren, zweitartigen Detektorwerts zu dem bekannten Prozesswert.

Dadurch kann bereits bei dem bekannten Prozesswert ein zweitartiger Detektorwert erfasst und für die Kalibrierung verwendet werden.

Gemäß einer Ausführung kann der zuvor genannte Schritt b), insbesondere nur, aufweisen bzw. umfassen, insbesondere bestehen aus:
- Normieren, insbesondere automatisches Normieren, bzw. Skalieren der Kalibrierzuordnung basierend auf dem gemessenen erstartigen Detektorwert.

Dies hat sich als eine einfache und zweckmäßige Vorgehensweise für eine erste Kalibrierung erwiesen.

Gemäß einer Ausführung kann das Zuordnen des gemessenen zweitartigen Detektorwerts zu dem Prozesswert ausgeführt werden bzw. erfolgen, falls der zweitartige Detektorwert einen, insbesondere vorgegebenen, Statistikschwellenwert erreichend, insbesondere überschreitend, gemessen ist. Dadurch kann gewährleistet werden, dass nur zweitartige Detektorwerte verwendet werden, welche den Statistikschwellenwert erreicht haben, so dass zweitartige Detektorwerte, welche auf einer zu geringen Anzahl an Detektionsereignissen basieren, insbesondere noch, nicht verwendet werden.

Gemäß einer Ausführung kann das Kalibrieren solange ausgeführt werden bzw. erfolgen, bis verschiedenen Prozesswerten in Abständen zueinander jeweils erreichend, insbesondere unterschreitend, einen, insbesondere vorgegebenen, Abstandsmaximalwert jeweils ein zweitartiger Detektorwert zugeordnet ist. Dadurch kann die Kalibrierung solange fortgesetzt werden, bis genügend zweitartige Detektorwerte mit zugehörigen Prozesswerten vorhanden sind, um eine genaue Zuordnung basierend auf zweitartigen Detektorwerten vorzunehmen. Anschließend kann die Kalibrierfunktionalität beendet werden. Insbesondere kann zwischen den Prozesswerten in Abständen zueinander jeweils erreichend, insbesondere unterschreitend, den Abstandsmaximalwert und/oder den, insbesondere zugeordneten, zweitartigen Detektorwerten interpoliert und/oder gefittet werden.

Die Erfindung betrifft des Weiteren ein, insbesondere automatisches, Verfahren zum, insbesondere automatischen, Messen eines, insbesondere des, Prozesswerts mindestens eines, insbesondere des mindestens einen, Stoffes, insbesondere angeordnet innerhalb eines, insbesondere des, Hohlkörpers, mittels einer, insbesondere der, Vorrichtung, wobei das Verfahren Folgendes aufweist bzw. umfasst:
- ein, insbesondere das, Verfahren zum Kalibrieren der Vorrichtung wie zuvor beschrieben, und
- Messen des Prozesswerts mittels Messens des zweitartigen Detektorwerts und Bestimmens des Prozesswerts mittels der modifizierten Kalibrierzuordnung basierend auf dem gemessenen zweitartigen Detektorwert.

Dadurch kann der Prozesswert durch Verwendung zweitartiger Detektorwerte bestimmt werden, wobei die Kalibrierung auf dem zuvor beschriebenen Verfahren beruht. Sofern noch nicht genügend zweitartige Detektorwerte vorhanden sind bzw. bei einem bestimmten zweitartigen Detektorwert keine Einträge in der Kalibrierzuordnung vorhanden sind, welche nahe genug liegen, kann auf erstartige Detektorwerte zurückgegriffen werden, um den Prozesswert zu bestimmen. Dabei kann die Kalibrierung wie zuvor beschrieben weiter ausgeführt werden, so dass anschließend mehr zweitartige Detektorwerte zuordenbar sind.

Die Erfindung betrifft des Weiteren ein, insbesondere elektrisches und/oder radiometrisches, System, insbesondere Messsystem, wobei das System eine, insbesondere die, Vorrichtung zum Messen eines, insbesondere des, Prozesswerts mindestens eines, insbesondere des mindestens einen, Stoffes, insbesondere angeordnet innerhalb eines, insbesondere des, Hohlkörpers, aufweist, und wobei das System zum, insbesondere automatischen, Ausführen eines, insbesondere des, Verfahrens wie zuvor beschrieben ausgebildet bzw. konfiguriert ist. Bezüglich des Verfahrens kann dabei auf alle zuvor beschriebenen Ausführungen zurückgegriffen werden.

Gemäß einer Ausführung kann das System einen, insbesondere den, Hohlkörper und/oder mindestens eine, insbesondere die mindestens eine, Strahlungsquelle aufweisen bzw. umfassen, welche zum Emittieren von, insbesondere den, Gammastrahlen mit einer, insbesondere der, diskreten Isotop-Gamma-Energie in mindestens den Stoff, insbesondere und den Hohlkörper, ausgebildet bzw. konfiguriert ist.

Insbesondere kann der Hohlkörper einen Behälter, insbesondere ein Rohr, aufweisen, insbesondere sein.

Mittels des beschriebenen Systems kann das erfindungsgemäße Verfahren in vorteilhafter Weise ausgeführt werden. Die bereits beschriebenen Vorteile können dabei erreicht werden.

Grundsätzlich sei erwähnt, dass beispielsweise analytische Verfahren bekannt sind, welche Kalibrierzuordnungen berechnen. Durch den analytischen Ansatz stehen die Ergebnisse typischerweise innerhalb weniger Minuten zur Verfügung. Allerdings werden dabei typischerweise nur die mono-energetischen Gammastrahlen berücksichtigt, wobei Streuungen typischerweise gar nicht oder nur über unzureichende Korrekturfaktoren behandelt werden. Abweichungen in der Form der Kalibrierkurve sind daher zu erwarten.

Mithilfe von aufwändigen Computersimulationen, welche beispielsweise auf einer Monte-Carlo-Simulation basieren, welche eine detaillierte Beschreibung der Geometrie wie Maße und Materialbeschreibung voraussetzt, kann eine realistische Kalibrierzuordnung vorberechnet werden. Die Computersimulation selbst benötigt typischerweise selbst mit parallelisierten Rechnerstrukturen mehrere Stunden bis einige Tage Rechenzeit, weshalb diese typischerweise noch nicht für einen breiten Einsatz praktikabel ist.

Mittels des/r hierin offenbarten Verfahren/s braucht oder kann die besonders aufwändige Computersimulation oder der Korrekturfaktor nicht erforderlich sein, und es kann trotzdem eine vergleichbare Genauigkeit der modifizierten Kalibrierzuordnung erreicht werden.

Grundsätzlich können bei einer, insbesondere der, Detektoreinrichtung, die Energieeigenschaften von detektierter Gammastrahlung gemessen werden. Dabei können in einem, insbesondere ersten, Messkanal (FE-Kanal; FE = Full Energy) zunächst nur diejenigen Gammastrahlen gemessen werden, die auch dem, insbesondere analytischen, Prozessmodell genügen. Dies sind beispielsweise alle Gammastrahlen, die nicht gestreut haben und damit noch die volle Energie der emittierenden Strahlungsquelle, insbesondere des emittierenden Isotops, haben. Die Anzahl der Gammastrahlen kann nun exakt, analytisch in Abhängigkeit des Prozesswerts wie Füllstand oder Dichte vorberechnet werden. Allerdings wurde erkannt, dass dabei typischerweise nur eine geringe Zählrate auftritt, da die Mehrheit der Gammastrahlen gestreut hat, bevor sie die Detektoreinrichtung erreichen. Dadurch reduziert sich auch die statistische Genauigkeit.

Dieser Nachteil kann wie folgt kompensiert werden. In einem zweiten Messkanal (MK-Kanal) können alle Gammastrahlen gemessen werden, d.h. auch die gestreuten Gammastrahlen mit einer geringeren Energie. Dieser zweite Messkanal besitzt die volle Messstatistik, aber auch die Ungenauigkeit durch Modellfehler durch die gestreuten Gammastrahlen. Es kann nun der korrekte, aber statistisch ungenaue Messwert aus dem FE-Kanal dazu verwendet werden, um die modifizierte Kalibrierzuordnung für den MK-Kanal zu erlernen. Die Werte der modifizierten Kalibrierzuordnung, insbesondere die zweitartigen Detektorwerte, können kontinuierlich den Werten, insbesondere den Prozesswerten, der berechneten Kalibrierzuordnung zugeordnet werden, je nachdem, welchen Prozesswert der FE-Kanal gerade misst. Mit diesem Verfahren kombiniert man somit die Genauigkeit, die eine Kalibrierung mit mehreren Messpunkten bietet, mit der Schnelligkeit, die eine vorberechnete Kalibrierung bietet.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Ansicht eines erfindungsgemäßen Systems aufweisend eine Vorrichtung und eines erfindungsgemäßen Verfahrens zum Kalibrieren der Vorrichtung und eines erfindungsgemäßen Verfahrens zum Messen mittels der Vorrichtung,
- Fig. 2: eine unnormierte Kalibrierzuordnung von erstartigen Detektorwerten zu Prozesswerten berechnet mittels des erfindungsgemäßen Verfahrens zum Kalibrieren,
- Fig. 3: die Kalibrierzuordnung der Fig. 2,
- Fig. 4: die Kalibrierzuordnung der Fig. 3 normiert mittels des erfindungsgemäßen Verfahrens zum Kalibrieren,
- Fig. 5: die Kalibrierzuordnung der Fig. 4 modifiziert mittels des erfindungsgemäßen Verfahrens zum Kalibrieren,
- Fig. 6: die Kalibrierzuordnung der Fig. 5 nochmals modifiziert mittels des erfindungsgemäßen Verfahrens zum Kalibrieren, und
- Fig. 7: ein Energiespektrum von Gammastrahlen.

### DETAILLIERTE BESCHREIBUNG DER AUSFÜHRUNGSBEISPIELE

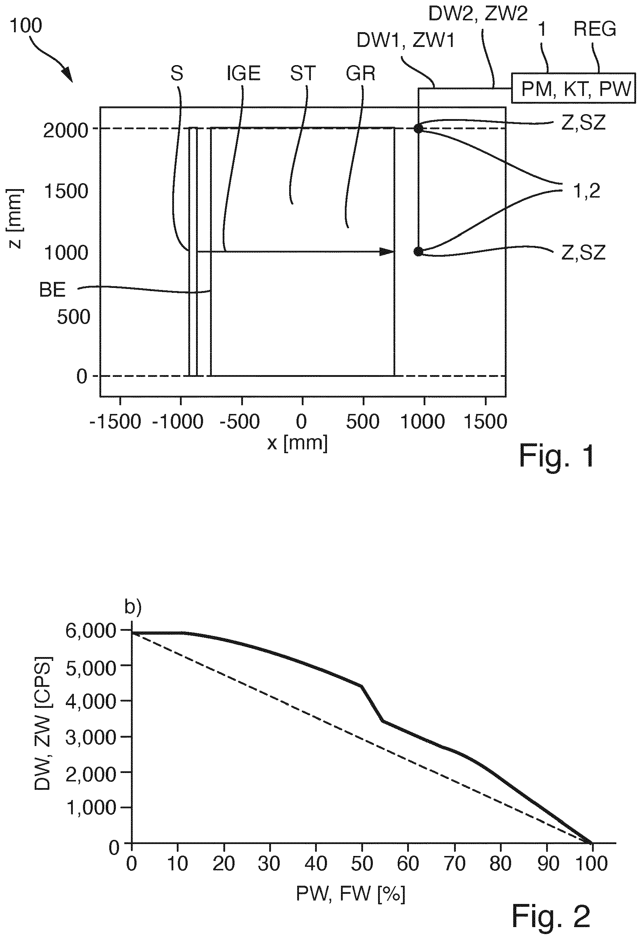

Fig. 1 zeigt ein erfindungsgemäßes System 100. Das System 100 weist eine Vorrichtung 1 zum Messen eines Prozesswerts PW mindestens eines Stoffes ST, insbesondere angeordnet innerhalb eines Hohlkörpers BE, auf.

Im Detail weist das System 100 den Hohlkörper BE auf.

Zusätzlich weist das System 100 mindestens eine Strahlungsquelle S, in dem gezeigten Ausführungsbeispiel nur eine einzige Strahlungsquelle und/oder in Form einer Stabstrahlungsquelle, auf, welche zum Emittieren von Gammastrahlen GR mit einer diskreten Isotop-Gamma-Energie IGE in mindestens den Stoff ST ausgebildet ist.

In dem gezeigten Ausführungsbeispiel wird für die mindestens eine Strahlungsquelle S Cäsium 137 (Cs 137) verwendet. Somit ist die diskrete Isotop-Gamma-Energie IGE 662 keV.

Des Weiteren weist die Vorrichtung 1 eine Detektoreinrichtung 2 auf. Die Detektoreinrichtung 2 ist zum Messen eines Detektorwerts DW mittels Erfassens von Gammastrahlen GR, welche mindestens den Stoff ST mindestens teilweise durchdrungen haben, und Erzeugens des Detektorwerts DW basierend auf den erfassten Gammastrahlen GR ausgebildet.

Im Detail weist die Detektoreinrichtung 2 mindestens einen Szintillator SZ, in dem gezeigten Ausführungsbeispiel zwei Szintillatoren SZ, zum Erfassen der Gammastrahlen GR auf. Der Szintillator SZ weist eine Dichte von minimal 3 g/cm³, insbesondere von minimal 5 g/cm³, und/oder von maximal 20 g/cm³, insbesondere von maximal 10 g/cm³, insbesondere von 7 g/cm³, auf.

In dem gezeigten Ausführungsbeispiel befindet sich die mindestens eine Strahlungsquelle S auf einer Seite, insbesondere Umfangsseite, des Hohlkörpers BE. Auf einer anderen, insbesondere gegenüberliegenden, Seite, insbesondere Umfangsseite, des Hohlkörpers BE befindet sich die Detektoreinrichtung 2.

Außerdem ist das System 100 zum Ausführen eines erfindungsgemäßen Verfahrens ausgebildet.

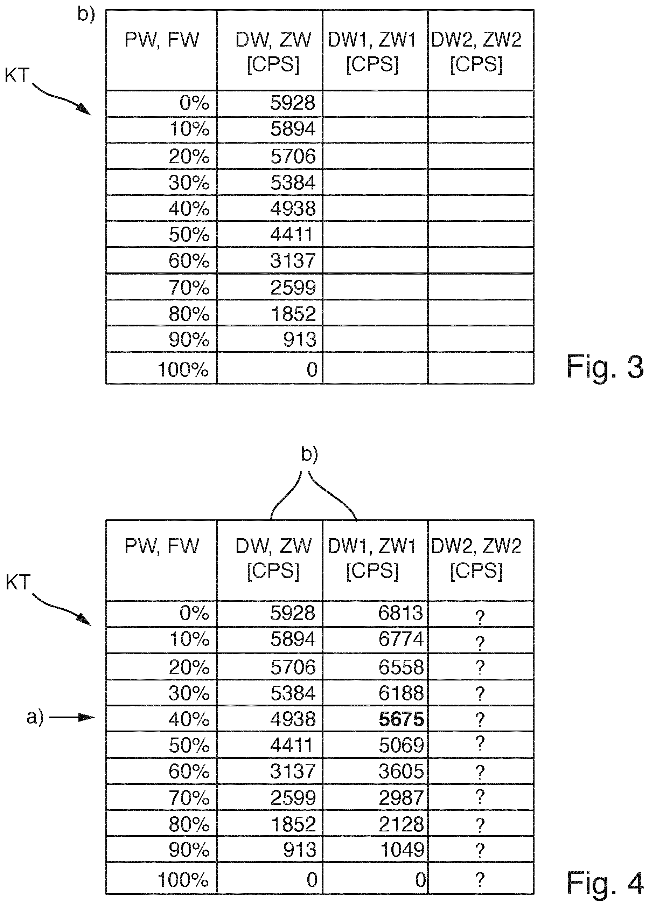

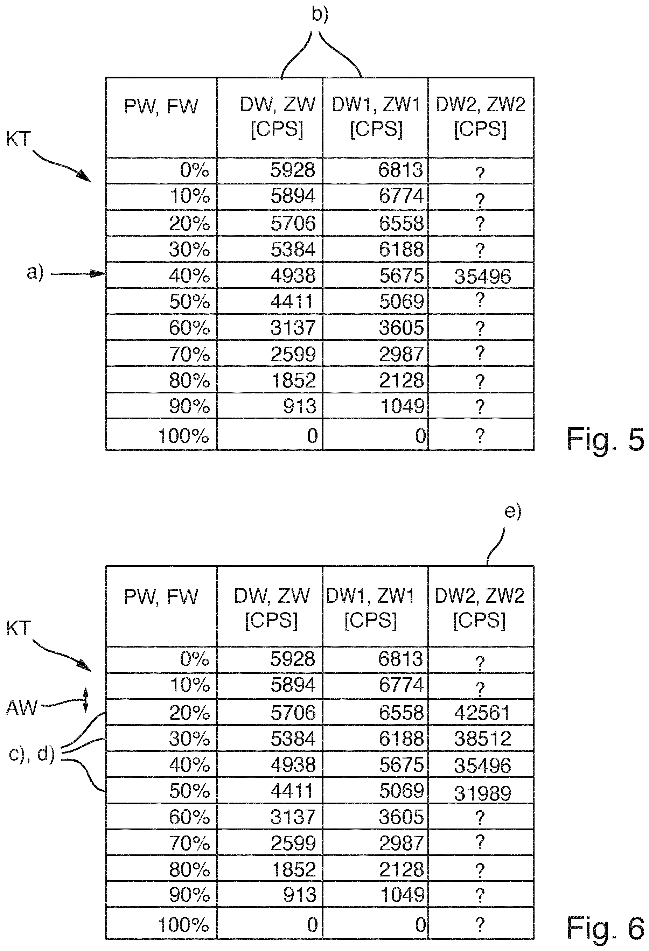

Fig. 1 bis 7 zeigen das erfindungsgemäße Verfahren zum Kalibrieren der Vorrichtung 1 zum Messen des Prozesswerts PW des mindestens einen Stoffes ST. Das Verfahren weist die Schritte auf:
a) bei einem bekannten Prozesswert PW Messen eines erstartigen Detektorwerts DW1 nur basierend auf erfassten Gammastrahlen GR, welche nicht oder wenig gestreut sind, insbesondere mittels der Detektoreinrichtung 2, wie in Fig. 4 und 5 gezeigt,
b) Berechnen einer Kalibrierzuordnung KT basierend auf einem Prozessmodell PM, wobei das Prozessmodell PM auf einer Beschreibung des Durchdringens nur berücksichtigend ungestreute Gammastrahlen GR basiert, und basierend auf dem gemessenen erstartigen Detektorwert DW1, wobei die Kalibrierzuordnung KT verschiedenen Prozesswerten PW jeweils einen erstartigen Detektorwert DW1 zuordnet, insbesondere mittels einer Recheneinrichtung REG der Vorrichtung 1, wie in Fig. 2 bis 4 gezeigt,
c) bei mindestens einem unbekannten Prozesswert PW Messen eines erstartigen Detektorwerts DW1 und Messen eines zweitartigen Detektorwerts DW2 mindestens basierend auf erfassten Gammastrahlen GR, welche gestreut oder mehr gestreut sind, insbesondere mittels der Detektoreinrichtung 2, wie in Fig. 6 gezeigt,
d) Bestimmen des unbekannten Prozesswerts PW mittels der berechneten Kalibrierzuordnung KT basierend auf dem gemessenen erstartigen Detektorwert DW1, insbesondere mittels der Recheneinrichtung REG, wie in Fig. 6 gezeigt, und
e) Modifizieren der Kalibrierzuordnung KT mittels Zuordnen des gemessenen zweitartigen Detektorwerts DW2 zu dem bestimmten Prozesswert PW, insbesondere mittels der Recheneinrichtung REG, wie in Fig. 6 gezeigt.

Im Detail weist das Verfahren den Schritt auf:
- Emittieren der Gammastrahlen GR mit der diskreten Isotop-Gamma-Energie IGE in mindestens den Stoff ST mittels der mindestens einen Strahlungsquelle S.

Weiter kann mittels der Kenntnisse über die Messgeometrie, insbesondere jeweilige Positionen und/oder jeweilige Abmessungen der mindestens einen Strahlungsquelle S, des Hohlkörpers BE und/oder der Detektoreinrichtung 2, anhand des, insbesondere einfachen, Prozessmodells PM berechnet werden, wieviel Gammastrahlen GR bei der Detektoreinrichtung 2 ankommen sollten.

Die Detektoreinrichtung 2 ist dazu ausgebildet, die ankommenden Gammastrahlen GR energieselektiv zu erfassen. Sie kann somit unterscheiden, ob ein ankommendes Gammaquant GR die volle Isotop-Gamma-Energie hat, also nicht gestreut hat, oder eine geringere Energie hat. Letzteres deutet darauf hin, dass mindestens ein Streuvorgang vorhanden ist.

Aus Gammastrahlen GR, welche die volle bzw. maximale Energie haben, kann der erstartige Detektorwert DW1, insbesondere ein erstartiger Zählratenwert ZW1, gebildet werden. Ebenso kann aus Gammastrahlen GR, welche nicht die volle Energie haben, insbesondere aber eine Energie gleich oder größer eines Rausch-Energiewerts NE haben, ein zweitartiger Detektorwert DW2, insbesondere ein zweitartiger Zählratenwert ZW2 gebildet werden. Dies gilt sowohl für die Berechnung mittels des Prozessmodells PM wie auch für die tatsächliche Aus- bzw. Durchführung.

### In anderen Worten:

### Das Verfahren weist auf:

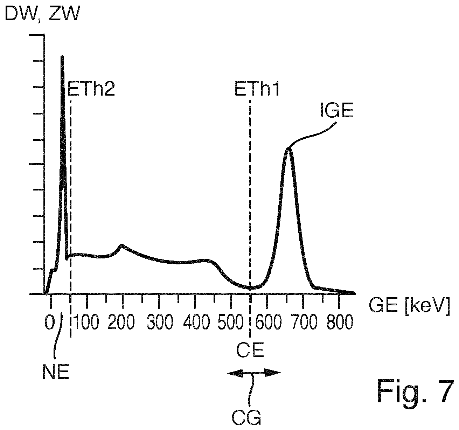

- Messen der erstartigen Detektorwerte DW1 jeweils nur basierend auf erfassten Gammastrahlen GR, deren Gamma-Energien GE gleich oder größer als ein erster Energieschwellenwert ETh1 sind, und
- Messen des zweitartigen Detektorwerts DW2 mindestens basierend auf erfassten Gammastrahlen GR, deren Gamma-Energien GE kleiner als der erste Energieschwellenwert ETh1 sind, wie in Fig. 7 gezeigt.

### Zudem weist das Verfahren auf:

- Messen der erstartigen Detektorwerte DW1 jeweils nur basierend auf erfassten Gammastrahlen GR, deren Gamma-Energien GE gleich oder größer als der erste Energieschwellenwert ETh1 sind, wobei der erste Energieschwellenwert ETh1 minimal 0,5-mal, in Fig. 7 gleich, eines Compton-Energiewerts CE einer Compton-Lücke CG der Gammastrahlen GR ist.

Des Weiteren weist die Detektoreinrichtung 2 ein Detektor-Rauschen mit dem Rausch-Energiewert NE auf.

### Das Verfahren weist auf:

- Messen des zweitartigen Detektorwerts DW2 nur basierend auf erfassten Gammastrahlen GR, deren Gamma-Energien GE gleich oder größer als ein zweiter Energieschwellenwert ETh2 sind, wobei der zweite Energieschwellenwert ETh2 gleich oder größer als der Rausch-Energiewert NE ist.

Fig. 2 zeigt typische Verläufe von Detektorwerten DW insbesondere Zählratenwerten ZW, (vertikale Achse) in Abhängigkeit von Prozesswerten PW (horizontale Achse), beispielsweise Füllstandwerten FW. Die durchgezogene Linie zeigt dabei eine tatsächliche Systemkurve, welche somit bei einer idealen Kalibrierung erhalten werden würde. Die gestrichelte Linie zeigt eine angenommene Kurve, welche auf lediglich zwei definierenden Punkten basiert.

Fig. 3 zeigt die Kalibrierzuordnung KT, bei welcher jedem Prozesswert PW zwischen 0 % und 100 % in Abständen von 10 % eine jeweilige berechnete FE-Rate, also ein berechneter Detektorwert, insbesondere Zählratenwert ZW (CPS = counts per second = Zählungen pro Sekunde), bei voller Energie, zugeordnet ist. Die angegebenen Werte entstammen der einfach durchführbaren Berechnung mittels des Prozessmodells PM. Die anderen beiden Spalten, welche eine normierte FE-Rate (bei voller Energie IGE) und eine MK-Rate (welche auch gestreute Gammastrahlen berücksichtigt) bezeichnen, sind noch nicht ausgefüllt.

Zunächst wird nun beispielhaft ein Prozesswert PW von 40 % angefahren, welcher bekannt ist. Die FE-Rate DW1, ZW1 wird bei diesem Prozesswert PW gemessen und die berechnete Rate ZW wird so normiert bzw. skaliert, dass der gemessene Wert DW1, ZW1 bei dem bekannten Prozesswert PW von 40 % dem Tabelleneintrag entspricht. Die anderen Tabelleneinträge werden entsprechend mitnormiert bzw. mitskaliert. Dabei entsteht die in Fig. 4 dargestellte Kalibrierzuordnung KT, in welcher eine weitere Spalte mit erstartigen Detektorwerten DW1, insbesondere Zählratewerten ZW1, angegeben ist, welche bei voller Energie für die jeweiligen Prozesswerte PW zu erwarten sind.

### In anderen Worten:

Der Schritt b) weist auf: Normieren der Kalibrierzuordnung KT basierend auf dem gemessenen erstartigen Detektorwert DW1.

Grundsätzlich ist es nun möglich, die Detektoreinrichtung 2 in Betrieb zu nehmen und den Hohlkörper BE mit einem Stoff ST zu füllen, welcher nicht mehr separat für die Kalibrierung, sondern im Rahmen eines normal laufenden Prozesses verwendet wird. Wird dabei beispielsweise der bereits bekannte Prozesswert PW von 40 % angefahren, was über die normierte FE-Rate DW1, ZW1 leicht erkannt werden kann, so kann der zweitartige Detektorwert DW2 gemessen werden und der entsprechende Wert kann in die rechte Spalte der Kalibrierzuordnung KT eingetragen werden. Die entsprechende Kalibrierzuordnung ist in Fig. 5 dargestellt.

Werden weitere Prozesswerte PW angefahren, welche sich insbesondere im Rahmen einer normalen Verwendung des Hohlkörpers BE ergeben, so können die entsprechenden Prozesswerte PW mithilfe der normierten FE-Rate DW1, ZW1 erfasst werden und es kann die MK-Rate DW2, ZW2, also die alle Energie gleich oder größer als der Rausch-Energiewert NE berücksichtigende Rate, gemessen werden. Entsprechende Werte DW2, ZW2 können in die letzte Spalte eingetragen werden, so dass diese sukzessive mehr Einträge bekommt. Die beispielhafte Kalibrierzuordnung KT ist in Fig. 6 dargestellt, wobei bereits vier entsprechende Werte DW2, PW2 angegeben sind. Nunmehr kann dynamisch zwischen FE-Rate DW1, ZW1 und MK-Rate DW2, PW2 umgeschaltet werden. Sobald die MK-Rate DW2, ZW2 genügend Einträge hat, die statistisch verwertbar sind, wird die MK-Rate DW2, ZW2 zur Prozesswertbestimmung verwendet. Dadurch wird eine höhere Genauigkeit erreicht. Soweit in der MK-Rate DW2, ZW2 noch leere Einträge vorhanden sind, wird die FE-Rate DW1, ZW1 zur Prozesswertbestimmung verwendet und die MK-Rate DW2, ZW2 mitgelernt.

### In anderen Worten:

Das Zuordnen des gemessenen zweitartigen Detektorwerts DW2 zu dem Prozesswert PW wird ausgeführt, falls der zweitartige Detektorwert DW2 einen Statistikschwellenwert erreichend gemessen ist.

### Außerdem weist das Verfahren die Schritte auf:

- bei dem bekannten Prozesswert PW, in dem gezeigten Ausführungsbeispiel von 40 %, Messen eines zweitartigen Detektorwerts DW2, und
- in der Kalibrierzuordnung KT Zuordnen des gemessenen zweitartigen Detektorwerts DW2 zu dem bekannten Prozesswert PW.

Weiter wird das Kalibrieren solange ausgeführt, bis verschiedenen Prozesswerten PW in Abständen zueinander jeweils erreichend einen Abstandsmaximalwert AW, in dem gezeigten Ausführungsbeispiel von 10%, jeweils ein zweitartiger Detektorwert DW2 zugeordnet ist.

Zudem zeigen Fig. 1 und 7 das erfindungsgemäße Verfahren zum Messen des Prozesswerts PW des mindestens eines Stoffes ST mittels der Vorrichtung 1, wobei das Verfahren aufweist:
- das Verfahren zum Kalibrieren der Vorrichtung 1 wie zuvor beschrieben, und
- Messen des Prozesswerts PW mittels Messen des zweitartigen Detektorwerts DW2 und Bestimmens des Prozesswerts PW mittels der modifizierten Kalibrierzuordnung KT basierend auf dem gemessenen zweitartigen Detektorwert DW2, insbesondere mittels der Vorrichtung 1.

Fig. 7 zeigt ein typisches Energiespektrum von Detektorwerten DW, insbesondere Zählratenwerten ZW, in Abhängigkeit von Energien, insbesondere welches von der Detektoreinrichtung 2 gemessen wird. Auf der horizontalen Achse ist dabei die jeweilige Energie GE der Gammastrahlen GR in der Einheit keV angetragen, an der vertikalen Achse ist der jeweilige Detektorwert DW, insbesondere der jeweilige Zählratenwert ZW, pro Energie bzw. Energiekanal angetragen. Dabei ist zunächst das Detektor-Rauschen bei kleinen Energien vorhanden, welches einen Rausch-Energiewert NE aufweist, bei welchem das Detektor-Rauschen endet. Das Detektor-Rauschen befindet sich unterhalb des zweiten Energieschwellenwerts ETh2. Anschließend bzw. darüber sind Detektorwerte DW, insbesondere Zählratenwerte ZW, von gestreuter Gammastrahlung GR vorhanden, welche sich auf einem im Vergleich zum Detektor-Rauschen vergleichsweise niedrigen Niveau befinden. In dem gezeigten Ausführungsbeispiel bei Verwendung von CS 137 für die mindestens eine Strahlungsquelle S beginnt bei etwa 500 keV die Compton-Lücke CG, auch als Compton-Gap CG bezeichnet, in welcher der Zählratenwert ZW nahezu null wird. Mittig innerhalb dieser Compton-Lücke CG befindet sich der Compton-Energiewert CE. Anschließend bzw. darüber hat das Spektrum noch einen Peak mit hohem Detektorwert DW, insbesondere hohem Zählratenwert ZW, welcher bei der Isotop-Gamma-Energie IGE, in dem gezeigten Ausführungsbeispiel bei Verwendung von Cs 137 für die mindestens eine Strahlungsquelle S bei 662 keV, liegt. Dies sind die nicht gestreuten Gammastrahlen GR. Der erste Energieschwellenwert ETh1 kann bei dem Compton-Energiewert CE gesetzt werden, wobei dieser typischerweise die Grenze zwischen gestreuten Gammastrahlen GR und nicht gestreuten Gammastrahlen GR markiert. Beispielsweise kann also für den FE-Kanal der erstartige Detektorwert DW1, insbesondere der erstartige Zählratenwert ZW1, nur basierend auf Energien verwendet werden, welche größer sind als der erste Energieschwellenwert ETh1, und für den MK-Kanal können alle Energien oberhalb des zweiten Schwellenwerts ETh2 verwendet werden.

In alternativen Ausführungsbeispielen kann die Detektoreinrichtung mindestens einen Szintillator, insbesondere mindestens einen organischen Szintillator, aufweisen, mittels welcher ein gemessenes bzw. detektiertes Energiespektrum einen weniger ausgeprägten Peak oder keinen Peak bei einer diskreten Isotop-Gamma-Energie aufweist bzw. hat. Anders formuliert: eine signifikante Häufigkeit, insbesondere Zählrate, kann mit der Compton-Lücke enden.

Da in dem gezeigten Ausführungsbeispiel die Gammastrahlen bzw. Gammaquanten GR in dem mindestens einen Szintillator SZ sowohl über den Fotoeffekt als auch über die Compton-Streuung detektiert bzw. gemessen, insbesondere erfasst, werden, kann es sein, dass auch Gammastrahlen GR mit voller Energie IGE nur einen Bruchteil der Energie IGE in dem mindestens einen Szintillator SZ deponieren könnten. Dadurch würden sie fälschlicherweise als Gammastrahlen GR mit zu niedriger Energie detektiert. Diesem Effekt kann man entgegenwirken, indem man das Detektormaterial mit hoher Dichte, insbesondere mit Elementen mit hoher Ordnungszahl Z, verwendet. Dann überwiegt der Fotoeffekt gegenüber der Compton-Streuung, womit die volle Energie, insbesondere IGE, detektiert wird.

Die Detektoreinrichtung 2, welcher für das hier beschriebene Verfahren verwendet werden kann, kann beispielsweise eines oder mehrere der folgenden Merkmale aufweisen bzw. besitzen:
- Die Detektoreinrichtung 2 kann beispielsweise die, insbesondere jeweiligen, Energien der detektierten Gammastrahlen GR auflösen. Typischerweise ist eine Pulsamplitude proportional zur Energie. Die Energie kann aber auch über andere Verfahren bestimmt werden, zum Beispiel Time-over-Threshold.
- Die Detektoreinrichtung 2 kann beispielsweise mindestens einen zweiten Zähler, der eine niedrige Energieschwelle besitzen kann, aufweisen, wobei dieser zweite Zähler alle detektierten Gammastrahlen GR registrieren kann.
- Die Detektoreinrichtung 2 kann beispielsweise mindestens einen ersten Zähler aufweisen, der eine höhere Energieschwelle als der zweite Zähler besitzen kann und nur Gammastrahlen GR mit einer hohen Energie registrieren kann. Die Energieschwelle in diesem Kanal kann beispielsweise so gelegt werden, dass nur Gammastrahlen registriert werden, die ohne Streuung an der Detektoreinrichtung 2 ankommen.

Insgesamt kann über die beschriebene Vorgehensweise eine sehr gute Kalibrierung zur genauen Messung von Prozesswerten PW erreicht werden, ohne dass hierfür besonders zeitaufwändige Computersimulationen oder das Anfahren mehrerer Prozesswerte PW in der Anlage erforderlich wären. Dies stellt im Vergleich zu anderen, insbesondere bekannten, Vorgehensweisen eine erhebliche Vereinfachung dar.

## Patentansprüche

1. Verfahren zum Kalibrieren einer Vorrichtung (1) zum Messen eines Prozesswerts (PW) mindestens eines Stoffes (ST),
- wobei die Vorrichtung (1) eine Detektoreinrichtung (2) aufweist, wobei die Detektoreinrichtung (2) zum Messen eines Detektorwerts (DW) mittels Erfassens von Gammastrahlen (GR), welche mindestens den Stoff (ST) mindestens teilweise durchdrungen haben, und Erzeugens des Detektorwerts (DW) basierend auf den erfassten Gammastrahlen (GR) ausgebildet ist,
- wobei das Verfahren die Schritte aufweist:
a) bei einem bekannten Prozesswert (PW) Messen eines erstartigen Detektorwerts (DW1) nur basierend auf erfassten Gammastrahlen (GR), welche nicht oder wenig gestreut sind,
b) Berechnen einer Kalibrierzuordnung (KT) basierend auf einem Prozessmodell (PM), wobei das Prozessmodell (PM) auf einer Beschreibung des Durchdringens nur berücksichtigend ungestreute Gammastrahlen (GR) basiert, und basierend auf dem gemessenen erstartigen Detektorwert (DW1), wobei die Kalibrierzuordnung (KT) verschiedenen Prozesswerten (PW) jeweils einen erstartigen Detektorwert (DW1) zuordnet,
c) bei mindestens einem unbekannten Prozesswert (PW) Messen eines erstartigen Detektorwerts (DW1) und Messen eines zweitartigen Detektorwerts (DW2) mindestens basierend auf erfassten Gammastrahlen (GR), welche gestreut oder mehr gestreut sind,
d) Bestimmen des unbekannten Prozesswerts (PW) mittels der berechneten Kalibrierzuordnung (KT) basierend auf dem gemessenen erstartigen Detektorwert (DW1), und
e) Modifizieren der Kalibrierzuordnung (KT) mittels Zuordnen des gemessenen zweitartigen Detektorwerts (DW2) zu dem bestimmten Prozesswert (PW),
- wobei das Verfahren aufweist:
- Messen der erstartigen Detektorwerte (DW1) jeweils nur basierend auf erfassten Gammastrahlen (GR), deren Gamma-Energien (GE) gleich oder größer als ein erster Energieschwellenwert (ETh1) sind, und
- Messen des zweitartigen Detektorwerts (DW2) mindestens basierend auf erfassten Gammastrahlen (GR), deren Gamma-Energien (GE) kleiner als der erste Energieschwellenwert (ETh1) sind.

2. Verfahren nach Anspruch 1,
- wobei der Prozesswert (PW) ein Füllstandwert (FW) oder ein Dichtewert ist.

3. Verfahren nach einem der vorhergehenden Ansprüche,
- wobei der Detektorwert (DW) ein Zählratenwert (ZW) ist oder von dem Zählratenwert (ZW) abhängig ist.

4. Verfahren nach einem der vorhergehenden Ansprüche, wobei das Verfahren aufweist:
- Messen der erstartigen Detektorwerte (DW1) jeweils nur basierend auf erfassten Gammastrahlen (GR), deren Gamma-Energien (GE) gleich oder größer als ein erster Energieschwellenwert (ETh1) sind, wobei der erste Energieschwellenwert (ETh1) minimal 0,5-mal, insbesondere gleich, eines Compton-Energiewerts (CE) einer Compton-Lücke (CG) der Gammastrahlen (GR) ist.

5. Verfahren nach einem der vorhergehenden Ansprüche,
- wobei die Detektoreinrichtung (2) ein Detektor-Rauschen mit einem Rausch-Energiewert (NE) aufweist, und
- wobei das Verfahren aufweist: Messen des zweitartigen Detektorwerts (DW2) nur basierend auf erfassten Gammastrahlen (GR), deren Gamma-Energien (GE) gleich oder größer als ein zweiter Energieschwellenwert (ETh2) sind, wobei der zweite Energieschwellenwert (ETh2) gleich oder größer als der Rausch-Energiewert (NE) ist.

6. Verfahren nach einem der vorhergehenden Ansprüche, wobei das Verfahren den Schritt aufweist:
- Emittieren der Gammastrahlen (GR) mit einer diskreten Isotop-Gamma-Energie (IGE) in mindestens den Stoff (ST) mittels mindestens einer Strahlungsquelle (S).

7. Verfahren nach einem der vorhergehenden Ansprüche,
- wobei die Detektoreinrichtung (2) mindestens einen Szintillator (SZ) zum Erfassen der Gammastrahlen (GR) aufweist, wobei der Szintillator (SZ) eine Dichte von minimal 3 g/cm³, insbesondere von minimal 5 g/cm³, und/oder von maximal 20 g/cm³, insbesondere von maximal 10 g/cm³, insbesondere von 7 g/cm³, aufweist.

8. Verfahren nach einem der vorhergehenden Ansprüche, wobei das Verfahren die Schritte aufweist:
- bei dem bekannten Prozesswert (PW) Messen eines zweitartigen Detektorwerts (DW2), und
- in der Kalibrierzuordnung (KT) Zuordnen des gemessenen zweitartigen Detektorwerts (DW2) zu dem bekannten Prozesswert (PW).

9. Verfahren nach einem der vorhergehenden Ansprüche,
- wobei der Schritt b) aufweist: Normieren der Kalibrierzuordnung (KT) basierend auf dem gemessenen erstartigen Detektorwert (DW1).

10. Verfahren nach einem der vorhergehenden Ansprüche,
- wobei das Zuordnen des gemessenen zweitartigen Detektorwerts (DW2) zu dem Prozesswert (PW) ausgeführt wird, falls der zweitartige Detektorwert (DW2) einen Statistikschwellenwert erreichend gemessen ist.

11. Verfahren nach einem der vorhergehenden Ansprüche,
- wobei das Kalibrieren solange ausgeführt wird, bis verschiedenen Prozesswerten (PW) in Abständen zueinander jeweils erreichend einen Abstandsmaximalwert (AW) jeweils ein zweitartiger Detektorwert (DW2) zugeordnet ist.

12. Verfahren zum Messen eines Prozesswerts (PW) mindestens eines Stoffes (ST) mittels einer Vorrichtung (1), wobei die Vorrichtung (1) eine Detektoreinrichtung (2) aufweist, wobei die Detektoreinrichtung (2) zum Messen eines Detektorwerts (DW) mittels Erfassens von Gammastrahlen (GR), welche mindestens den Stoff (ST) mindestens teilweise durchdrungen haben, und Erzeugens des Detektorwerts (DW) basierend auf den erfassten Gammastrahlen (GR) ausgebildet ist, wobei das Verfahren aufweist:
- ein Verfahren zum Kalibrieren der Vorrichtung (1) nach einem der vorhergehenden Ansprüche, und
- Messen des Prozesswerts (PW) mittels Messens des zweitartigen Detektorwerts (DW2) und Bestimmens des Prozesswerts (PW) mittels der modifizierten Kalibrierzuordnung (KT) basierend auf dem gemessenen zweitartigen Detektorwert (DW2).

13. System (100),
- wobei das System (100) eine Vorrichtung (1) zum Messen eines Prozesswerts (PW) mindestens eines Stoffes (ST) aufweist, wobei die Vorrichtung (1) eine Detektoreinrichtung (2) aufweist, wobei die Detektoreinrichtung (2) zum Messen eines Detektorwerts (DW) mittels Erfassens von Gammastrahlen (GR), welche mindestens den Stoff (ST) mindestens teilweise durchdrungen haben, und Erzeugens des Detektorwerts (DW) basierend auf den erfassten Gammastrahlen (GR) ausgebildet ist, und
- wobei das System (100) zum Ausführen eines Verfahrens nach einem der vorhergehenden Ansprüche ausgebildet ist.

14. System (100) nach Anspruch 13, wobei das System (100) aufweist:
- einen Hohlkörper (BE), und/oder
- mindestens eine Strahlungsquelle (S), welche zum Emittieren von Gammastrahlen (GR) mit einer diskreten Isotop-Gamma-Energie (IGE) in mindestens den Stoff (ST) ausgebildet ist.

## Claims

1. Method for calibrating an apparatus (1) for measuring a process value (PW) of at least one substance (ST),
- wherein the apparatus (1) has a detector device (2), wherein the detector device (2) is embodied for measuring a detector value (DW) by means of capturing gamma rays (GR) that have at least partially penetrated at least the substance (ST), and for producing the detector value (DW) based on the captured gamma rays (GR),
- wherein the method includes the steps of:
a) in the case of a known process value (PW), measuring a detector value (DW1) of a first type only based on captured gamma rays (GR) that are not scattered or are scattered little,
b) calculating a calibration assignment (KT) based on a process model (PM), wherein the process model (PM) is based on a description of the penetration only taking into account unscattered gamma rays (GR), and based on the measured detector value (DW1) of the first type, wherein the calibration assignment (KT) assigns in each case a detector value (DW1) of the first type to different process values (PW),
c) in the case of at least one unknown process value (PW), measuring a detector value (DW1) of the first type and measuring a detector value (DW2) of a second type at least based on captured gamma rays (GR) that are scattered or scattered more,
d) determining the unknown process value (PW) by means of the calculated calibration assignment (KT) based on the measured detector value (DW1) of the first type, and
e) modifying the calibration assignment (KT) by means of assigning the measured detector value (DW2) of the second type to the determined process value (PW),
- wherein the method includes:
- measuring the detector values (DW1) of the first type in each case only based on captured gamma rays (GR) having gamma energies (GE) that are the same as or greater than a first energy threshold value (ETh1), and
- measuring the detector value (DW2) of the second type at least based on captured gamma rays (GR) having gamma energies (GE) that are smaller than the first energy threshold value (ETh1).

2. Method according to claim 1,
- wherein the process value (PW) is a filling level value (FW) or a density value.

3. Method according to either of the preceding claims,
- wherein the detector value (DW) is a count rate value (ZW) or is dependent on the count rate value (ZW).

4. Method according to one of the preceding claims, wherein the method includes:
- measuring the detector values (DW1) of the first type in each case only based on captured gamma rays (GR) having gamma energies (GE) that are the same as or greater than the first energy threshold value (ETh1), wherein the first energy threshold value (ETh1) is at least 0.5 times that of, in particular the same as, a Compton energy value (CE) of a Compton gap (CG) of the gamma rays (GR).

5. Method according to one of the preceding claims,
- wherein the detector device (2) has a detector noise with a noise energy value (NE), and
- wherein the method includes: measuring the detector value (DW2) of the second type only based on captured gamma rays (GR) having gamma energies (GE) that are the same as or greater than a second energy threshold value (ETh2), wherein the second energy threshold value (ETh2) is equal to or greater than the noise energy value (NE).

6. Method according to one of the preceding claims, wherein the method includes the step of:
- emitting the gamma rays (GR) with a discrete isotope gamma energy (IGE) into at least the substance (ST) by means of the at least one radiation source (S).

7. Method according to one of the preceding claims,
- wherein the detector device (2) has at least one scintillator (SZ) for capturing the gamma rays (GR), wherein the scintillator (SZ) has a density of at least 3 g/cm³, in particular of at least 5 g/cm³, and/or of at most 20 g/cm³, in particular of at most 10 g/cm³, in particular of 7 g/cm³.

8. Method according to one of the preceding claims, wherein the method includes the steps of:
- in the case of the known process value (PW), measuring a detector value (DW2) of the second type, and
- assigning the measured detector value (DW2) of the second type to the known process value (PW) in the calibration assignment (KT).

9. Method according to one of the preceding claims,
- wherein step b) includes: normalizing the calibration assignment (KT) based on the measured detector value (DW1) of the first type.

10. Method according to one of the preceding claims,
- wherein the assignment of the measured detector value (DW2) of the second type to the process value (PW) is carried out if the detector value (DW2) of the second type is measured as reaching a statistic threshold value.

11. Method according to one of the preceding claims,
- wherein the calibration is performed until in each case a detector value (DW2) of the second type has been assigned to different process values (PW) at intervals from one another that in each case reach an interval maximum value (AW).

12. Method for measuring a process value (PW) of at least one substance (ST) by means of an apparatus (1), wherein the apparatus (1) has a detector device (2), wherein the detector device (2) is embodied for measuring a detector value (DW) by means of capturing gamma rays (GR) that have at least partially penetrated at least the substance (ST), and for producing the detector value (DW) based on the captured gamma rays (GR), wherein the method includes:
- a method for calibrating the apparatus (1) according to one of the preceding claims, and
- measuring the process value (PW) by means of measuring the detector value (DW2) of the second type and of determining the process value (PW) by means of the modified calibration assignment (KT) based on the measured detector value (DW2) of the second type.

13. System (100),
- wherein the system (100) has an apparatus (1) for measuring a process value (PW) of at least one substance (ST), wherein the apparatus (1) has a detector device (2), wherein the detector device (2) is embodied for measuring a detector value (DW) by means of capturing gamma rays (GR) that have at least partially penetrated at least the substance (ST), and for producing the detector value (DW) based on the captured gamma rays (GR), and
- wherein the system (100) is embodied for carrying out a method according to one of the preceding claims.

14. System (100) according to Claim 13, wherein the system (100) has:
- a hollow body (BE), and/or
- at least one radiation source (S), which is embodied for emitting gamma rays (GR) having a discrete isotope gamma energy (IGE) into at least the substance (ST).

## Revendications

1. Procédé pour étalonner un arrangement (1) servant à mesurer une valeur de processus (PW) d'au moins une substance (ST),
- l'arrangement (1) comprenant un dispositif de détection (2), le dispositif de détection (2) étant configuré pour mesurer une valeur de détection (DW) au moyen de la détection de rayons gamma (GR) qui ont au moins partiellement pénétré dans la substance (ST) et de la génération de la valeur de détection (DW) sur la base des rayons gamma (GR) détectés,
- le procédé comprenant les étapes suivantes :
a) à une valeur de processus (PW) connue, mesure d'une valeur de détecteur de premier type (DW1) uniquement sur la base de rayons gamma (GR) détectés qui ne sont pas ou peu dispersés,
b) calcul d'une association d'étalonnage (KT) sur la base d'un modèle de processus (PM), le modèle de processus (PM) étant basé sur une description de la pénétration ne prenant en compte que des rayons gamma (GR) non diffusés, et sur la base de la valeur de détecteur de premier type (DW1) mesurée, l'association d'étalonnage (KT) associant une valeur de détecteur de premier type (DW1) à différentes valeurs de processus (PW),
c) à au moins une valeur de processus (PW) inconnue, mesure d'une valeur de détecteur de premier type (DW1) et mesure d'une valeur de détecteur de deuxième type (DW2) au moins sur la base de rayons gamma (GR) détectés qui sont diffusés ou davantage diffusés,
d) détermination de la valeur de processus (PW) inconnue au moyen de l'association d'étalonnage (KT) calculée sur la base de la valeur de détecteur de premier type (DW1) mesurée, et
e) modification de l'association d'étalonnage (KT) au moyen de l'association de la valeur de détecteur de deuxième type (DW2) mesurée à la valeur de processus (PW) déterminée,
- le procédé comprenant :
- mesure des valeurs de détecteur de premier type (DW1), respectivement en se basant uniquement sur les rayons gamma (GR) détectés dont les énergies gamma (GE) sont égales ou supérieures à une première valeur de seuil d'énergie (ETh1), et
- mesure de la valeur de détecteur de deuxième type (DW2) en se basant au moins sur les rayons gamma détectés (GR) dont les énergies gamma (GE) sont inférieures à la première valeur de seuil d'énergie (ETh1).

2. Procédé selon la revendication 1,
- la valeur de processus (PW) étant une valeur de niveau de remplissage (FW) ou une valeur de densité.

3. Procédé selon l'une des revendications précédentes,
- la valeur de détecteur (DW) étant une valeur de taux de comptage (ZW) ou étant dépendante de la valeur de taux de comptage (ZW).

4. Procédé selon l'une des revendications précédentes, le procédé comprenant :
- mesure des valeurs de détecteur de premier type (DW1), respectivement en se basant uniquement sur les rayons gamma détectés (GR) dont les énergies gamma (GE) sont égales ou supérieures à une première valeur de seuil d'énergie (ETh1), la première valeur de seuil d'énergie (ETh1) étant au moins 0,5 fois, en particulier égale, à une valeur d'énergie Compton (CE) d'un intervalle Compton (CG) des rayons gamma (GR).

5. Procédé selon l'une des revendications précédentes,
- le dispositif de détection (2) possédant un bruit de détection ayant une valeur d'énergie de bruit (NE), et
- le procédé comprenant : mesure de la valeur de détecteur de deuxième type (DW2) en se basant uniquement sur les rayons gamma détectés (GR) dont les énergies gamma (GE) sont égales ou supérieures à une deuxième valeur de seuil d'énergie (ETh2), la deuxième valeur de seuil d'énergie (ETh2) étant égale ou supérieure à la valeur d'énergie de bruit (NE).

6. Procédé selon l'une des revendications précédentes, le procédé comprenant l'étape suivante :
- émission de rayons gamma (GR) ayant une énergie gamma isotopique (IGE) discrète dans au moins la substance (ST) au moyen d'au moins une source de rayonnement (S).

7. Procédé selon l'une des revendications précédentes,
- le dispositif de détection (2) possédant au moins un scintillateur (SZ) destiné à détecter les rayons gamma (GR), le scintillateur (SZ) possédant une densité d'au moins 3 g/cm³, en particulier d'au moins 5 g/cm³, et/ou au maximum de 20 g/cm³, en particulier au maximum de 10 g/cm³, en particulier de 7 g/cm³.

8. Procédé selon l'une des revendications précédentes, le procédé comprenant les étapes suivantes :
- à la valeur de processus connue (PW), mesure d'une valeur de détecteur de deuxième type (DW2), et
- dans l'association d'étalonnage (KT), association de la valeur de détecteur de deuxième type (DW2) mesurée à la valeur de processus connue (PW).

9. Procédé selon l'une des revendications précédentes,
- l'étape b) comprenant : normalisation de l'association d'étalonnage (KT) sur la base de la valeur de détection de premier type (DW1) mesurée.

10. Procédé selon l'une des revendications précédentes,
- l'association de la valeur de détecteur de deuxième type (DW2) mesurée à la valeur de processus (PW) étant effectuée si la valeur de détecteur de deuxième type (DW2) est mesurée comme atteignant un seuil statistique.

11. Procédé selon l'une des revendications précédentes,
- l'étalonnage étant effectué jusqu'à ce qu'une valeur de détecteur de deuxième type (DW2) soit respectivement associée à différentes valeurs de processus (PW) à des distances les unes des autres atteignant respectivement une valeur maximale de distance (AW).

12. Procédé de mesure d'une valeur de processus (PW) d'au moins une substance (ST) au moyen d'un arrangement (1), l'arrangement (1) comprenant un dispositif de détection (2), le dispositif de détection (2) étant configuré pour mesurer une valeur de détection (DW) au moyen de la détection de rayons gamma (GR) qui ont au moins partiellement pénétré dans la substance (ST) et de la génération de la valeur de détection (DW) sur la base des rayons gamma (GR) détectés, le procédé comprenant :
- un procédé pour étalonner l'arrangement (1) selon l'une des revendications précédentes, et
- mesure de la valeur de processus (PW) au moyen de la mesure de la valeur de détecteur de deuxième type (DW2) et de la détermination de la valeur de processus (PW) au moyen de l'association d'étalonnage (KT) modifiée en se basant sur la valeur de détecteur de deuxième type (DW2) mesurée.

13. Système (100),
- le système (100) possédant un arrangement (1) servant à mesurer une valeur de processus (PW) d'au moins une substance (ST), l'arrangement (1) comprenant un dispositif de détection (2), le dispositif de détection (2) étant configuré pour mesurer une valeur de détection (DW) au moyen de la détection de rayons gamma (GR) qui ont au moins partiellement pénétré dans la substance (ST) et de la génération de la valeur de détection (DW) sur la base des rayons gamma (GR) détectés, et
- le système (100) étant configuré pour mettre en œuvre un procédé selon l'une des revendications précédentes.

14. Système (100) selon la revendication 13, le système (100) possédant :
- un corps creux (BE), et/ou
- au moins une source de rayonnement (S) qui est configurée pour émettre des rayons gamma (GR) ayant une énergie gamma isotopique (IGE) discrète dans au moins la substance (ST).
